# EUROPÄISCHE PATENTANMELDUNG

(11) **EP 1 579 947 A1**
(43) Veröffentlichungstag der Anmeldung: **28.09.2005**
(21) Anmeldenummer: 04006935.3
(22) Anmeldetag: 23.03.2004
(51) Int. Cl.: B23P 19/06, B25B 29/02

(54) **Vorrichtung und Verfahren zur Überprüfung eines Spannbolzens**

(71) Anmelder: SIEMENS AKTIENGESELLSCHAFT, 80333 München (DE)
(72) Erfinder: Benning, Klaus, 45479 Mülheim (DE); Brunnstein, Wolfgang, 45739 Oer-Erkenschwick (DE); Hader, Michael, 45879 Gelsenkirchen (DE); Horn, Hans-Jürgen, 45479 Mülheim (DE); Wilhelmi, Claudia, 46047 Oberhausen (DE)

(57) **Zusammenfassung**

Die Erfindung betrifft eine Vorrichtung und ein Verfahren zur Überprüfung eines Spannbolzens (11) einer dynamoelektrischen Maschine (1). Danach wird eine Streckvorrichtung (27) zum Ausüben einer Zugkraft auf den Spannbolzen (11) und eine Längenmessvorrichtung (29) zum Messen einer Längenausdehnung des Spannbolzens (11) angebracht, wobei die Zugkraft und die Längenausdehnung in einem Anzeigegerät (26) dargestellt und protokolliert werden.

## Beschreibung

Die Erfindung betrifft eine Vorrichtung und ein Verfahren zur Überprüfung eines Spannbolzens.

Unter einer dynamoelektrischen Maschine im Sinne der vorliegenden Anmeldung wird jeder Energiewandler verstanden, der elektrische in mechanische Energie oder mechanische in elektrische Energie umwandelt. Insbesondere ist unter einer dynamoelektrischen Maschine ein Generator zur elektrischen Energieversorgung zu verstehen.

Ein Generator als Ausführungsform einer dynamoelektrischen Maschine besteht unter anderem aus elektrisch aktiven Teilen, zu denen ein Ständer und ein drehbar gelagerter Läufer gehören. Der Ständer besteht aus aufeinander geschichteten Segmentblechen, die auch als Eisenbleche bezeichnet werden können. In der Regel weist der Läufer eine geschmiedete Massivwelle auf. Kleine Läufer werden meist aus Einzelblechen hergestellt. Die Segmentbleche sind mit Nuten zur Aufnahme von Wicklungen versehen. Eine hohe Magnetisierbarkeit und geringere Hysterese- oder Wirbelstromverluste der Segmentbleche sind von Vorteil. Durch dünne Papier-, Lack- oder Oxidschichten werden die Segmentbleche gegeneinander isoliert. Komplett ausgebildete Ständer oder Läufer bestehen aus vielen Segmentblechen. Das Gebilde der aufeinander gestapelten Segmentbleche wird als Blechpaket bezeichnet.

Die Segmentbleche werden einzeln per Hand oder mit Hilfe von Maschinen aufeinander gestapelt. Die Segmentbleche umfassen Bohrungen, durch die sogenannte Spannbolzen geführt werden können. Die Spannbolzen durchziehen das gesamte Blechpaket und ragen in der Regel an einem vorderen und einem hinteren Teil des Blechpakets hervor. In vielen Ausführungsformen weist der Spannbolzen an seinen Enden ein Gewinde auf. Durch Anbringen einer Mutter auf das Gewinde wird durch Drehen der Mutter eine Kraft auf das Blechpaket ausgeübt, die dazu führt, dass das Blechpaket fest zusammengepresst wird. Die Mutter wird dann anschließend gesichert, damit sie sich nicht mehr lösen kann.

Im Betrieb der dynamoelektrischen Maschine wirken hohe Kräfte, insbesondere Fliehkräfte. Die einzelnen Bauteile der dynamoelektrischen Maschine werden stark beansprucht. Insbesondere werden die Spannbolzen stark beansprucht. Unter besonderen Betriebsbedingungen kann es hierbei vorkommen, dass einzelne Spannbolzen während des Betriebes brechen.
Im Betrieb ist es nahezu unmöglich, den Zustand der Spannbolzen zu überprüfen. Auch während einer Revision bzw. während einer Überprüfung der dynamoelektrischen Maschine gab es bisher keine Möglichkeit den Zustand der Spannbolzen zu überprüfen.

Aufgabe der vorliegenden Erfindung ist es eine Vorrichtung und ein Verfahren zur Überprüfung eines Spannbolzens anzugeben.

Die auf die Vorrichtung hin gerichtete Aufgabe wird gelöst durch eine Vorrichtung zur Überprüfung eines Spannbolzens mit einer Streckvorrichtung, die zum Ausüben einer Zugkraft auf den Spannbolzen ausgebildet ist, und einer Längenmessvorrichtung zum Messen einer Längenausdehnung des Spannbolzens aufgrund der Einwirkung der Streckvorrichtung sowie einem Anzeigegerät zum Darstellen und Protokollieren der Zugkraft und der Längenausdehnung.

Die Erfindung geht davon aus, dass der Spannbolzen durch eine Zugkraft gestreckt werden kann. Der Spannbolzen dehnt sich durch den Einfluss der Zugkraft aus. Die Längenausdehnung des Spannbolzens wird dabei gemessen. Mit dem Vergleich der Werte für die Zugkraft und der Längenausdehnung wird der Spannbolzen schließlich überprüft. Die Überprüfung geschieht mit Hilfe eines Anzeigegerätes.

Der Vorteil der Erfindung liegt unter anderem darin, dass der Spannbolzen im eingebauten Zustand überprüft werden kann. Der Spannbolzen muss somit nicht ausgebaut werden, was einen hohen Aufwand bedeuten würde.

In einer vorteilhaften Weiterbildung weist die Streckvorrichtung ein Hydraulikaggregat zum Ausüben der Zugkraft auf.

Der Vorteil liegt unter anderem darin, dass mit einem Hydraulikaggregat eine Streckvorrichtung vorgestellt wird, die leicht transportiert werden kann. Dadurch ist es möglich, die Überprüfung des Spannbolzens vor Ort durchzuführen. Die komplette elektrodynamische Maschine muss dafür nicht bewegt werden.

In einer vorteilhaften Weiterbildung weist die Streckvorrichtung eine Spannvorrichtung zum Befestigen an dem Spannbolzen auf.

Dadurch ist es möglich, die Zugkraft über die Spannvorrichtung, die mit dem Spannbolzen kraftschlüssig verbunden werden kann, sehr einfach zu übertragen.

In einer weiteren vorteilhaften Ausbildung ist die Spannvorrichtung mit einer Platte und zumindest einer mit der Platte verbundenen ersten Gewindeführungseinrichtung mit einem Gewinde zum Aufnehmen einer ersten Gewindeschraube sowie mit zumindest einer zweiten Gewindeführungseinrichtung mit einem Gewinde zum Aufnehmen einer zweiten Gewindeschraube ausgebildet.

Dadurch ist es möglich, eine Spannvorrichtung einzusetzen, die über eine Gewindeführungseinrichtung an den Spannbolzen befestigt werden kann. Der Vorteil ist hierbei, dass diese Spannvorrichtung derart ausgebildet ist, dass sie jederzeit vom Spannbolzen gelöst werden kann. Die Spannvorrichtung kann somit für jeden einzelnen Spannbolzen der elektrodynamischen Maschine eingesetzt werden.

In einer weiteren vorteilhaften Ausbildung der Erfindung ist die erste Gewindeführungseinrichtung zum Ausüben einer Festhaltekraft auf den Spannbolzen ausgebildet und die zweite Gewindeführungseinrichtung ist zum Ausüben einer Druckkraft auf eine Gegenplatte zum Ausüben einer Zugkraft auf den Spannbolzen ausgebildet.

In einer vorteilhaften Ausbildung weist die Spannvorrichtung in einer alternativen Ausführungsform eine Randplatte und eine zumindest eine Bohrung aufweisende Deckplatte auf. Die Bohrung ist zum Aufnehmen eines Keilstücks ausgebildet. Das Keilstück weist darüber hinaus einen Keil auf. Mit Hilfe dieses Keiles und einem an dem Bolzen anliegenden Gegenkeiles wird durch Bewegen des Keilstückes in Richtung des Spannbolzens eine Festhaltekraft auf den Spannbolzen ausgeübt, wodurch die Spannvorrichtung mit dem Spannbolzen verbunden ist. Durch eine Gewindeeinrichtung wird über eine Gewindeschraube eine Druckkraft auf eine Gegenplatte ausgeübt, was zu einer Zugkraft auf den Spannbolzen führt.

Damit wird die Möglichkeit geschaffen, eine Zugkraft äußerst einfach auf den Spannbolzen auszuüben. Darüber hinaus bietet diese vorteilhafte Ausbildung der Erfindung die Möglichkeit die Festhaltekraft leicht zugänglich von vorne über das Keilstück auszuüben. Die Zugkraft wird hierbei über einem Drehmoment, das auf die zweite Gewindeführungseinrichtung einwirkt, übertragen.

Damit wird die Möglichkeit geschaffen, eine Zugkraft äußerst einfach auf den Spannbolzen auszuüben. Die Zugkraft wird hierbei über ein Drehmoment, das auf die zweite Gewindeführungseinrichtung einwirkt, übertragen.

Die auf das Verfahren hin gerichtete Aufgabe wird gelöst durch ein Verfahren zur Überprüfung eines Spannbolzens, wobei an dem Spannbolzen eine Streckvorrichtung, die eine Zugkraft auf den Spannbolzen ausübt, angebracht wird, wodurch sich der Spannbolzen in seiner Längsausrichtung ausdehnt und die Zugkraft und die Längenausdehnung mit einem Anzeigegerät dargestellt und protokolliert wird.

Somit ist eine einfache Möglichkeit vorgestellt, einen Spannbolzen im eingebauten Zustand zu überprüfen.

In einer weiteren vorteilhaften Ausbildung des Verfahrens wird an dem Spannbolzen eine Spannvorrichtung angebracht, die mit einer ersten Gewindeeinrichtung an dem Spannbolzen kraftschlüssig angebracht wird und die mit einer zweiten Gewindeeinrichtung eine Druckkraft auf eine Gegenplatte ausübt, wodurch der Spannbolzen in seiner Längsausrichtung ausgedehnt wird.
Der Vorteil liegt unter anderem darin, dass die Zugkraft über eine einfache Drehmomentübertragung ausgeübt wird.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigen:
- Figur 1: eine perspektivische Darstellung einer dynamoelektrischen Maschine,
- Figur 2: eine perspektivische Darstellung einer dynamoelektrischen Maschine,
- Figur 3: eine vergrößerte Darstellung des Ausschnitts A aus Figur 2,
- Figur 4: eine Seitenansicht einer Spannvorrichtung,
- Figur 5: eine Draufsicht einer Spannvorrichtung,
- Figur 6: eine schematische Darstellung einer Messeinrichtung,
- Figur 7: eine Draufsicht auf eine alternative Spannvorrichtung,
- Figur 8: eine Seitenansicht einer alternativen Spannvorrichtung,
- Figur 9: perspektivische Darstellung eines Keilstückes und
- Figur 10: eine Seitenansicht eines Keilstückes.

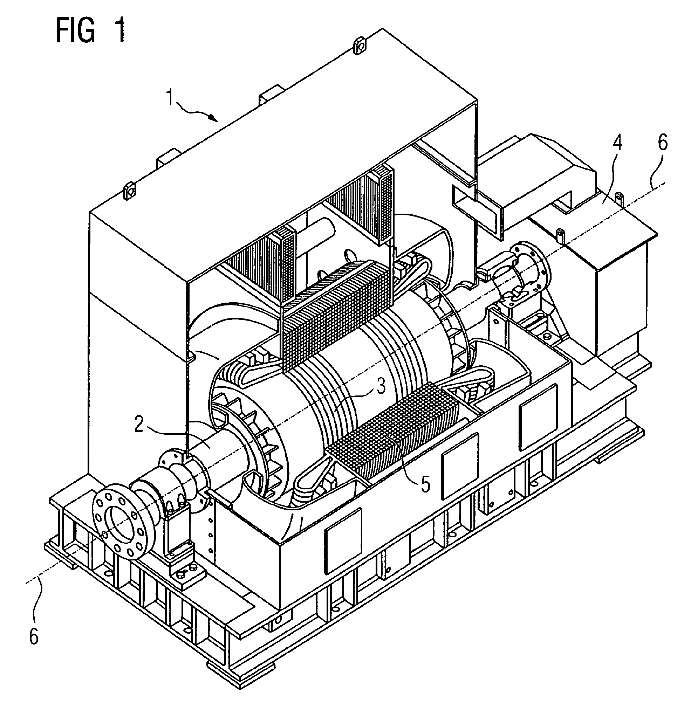

In Figur 1 ist ein Generator 1 als Ausführungsform eines elektrodynamischen Wandlers dargestellt. Der Generator 1 weist einen drehbar gelagerten Rotor 2 auf. Auf den drehbar gelagerten Rotor 2 ist eine Läuferwicklung 3 angebracht. Über eine nicht näher dargestellte Erregereinrichtung 4 fließt ein elektrischer Strom durch die Läuferwicklung 3 und erzeugt dadurch ein magnetisches Feld.

Rotationssymmetrisch um den Rotor 2 ist eine Ständerwicklung 5 angeordnet. Die Ständerwicklung 5 weist hierbei elektrische Leitungen auf. Senkrecht zu einer Rotationsachse 6 sind nicht näher dargestellte Blechpakete in der Ständerwicklung 5 angeordnet. Der Rotor 2 wird in der Regel durch eine nicht näher dargestellte Dampf- oder Gasturbine oder einer Dampf- und Gasturbine in Rotation versetzt. Das über die Erregereinrichtung 4 entwickelbare Magnetfeld der Läuferwicklung 3 wird dadurch ebenfalls in Rotation versetzt. Dieses sich ändernde Magnetfeld induziert in der Ständerwicklung 5 eine elektrische Spannung. Diese elektrische Spannung kann anschließend zur elektrischen Energieversorgung genutzt werden.

Die Drehzahl des Rotors beträgt hierbei 50 Hz bzw. 60 Hz. Bei solch hohen Drehzahlen wird die gesamte Anordnung des Generators 1 mechanisch stark beansprucht.

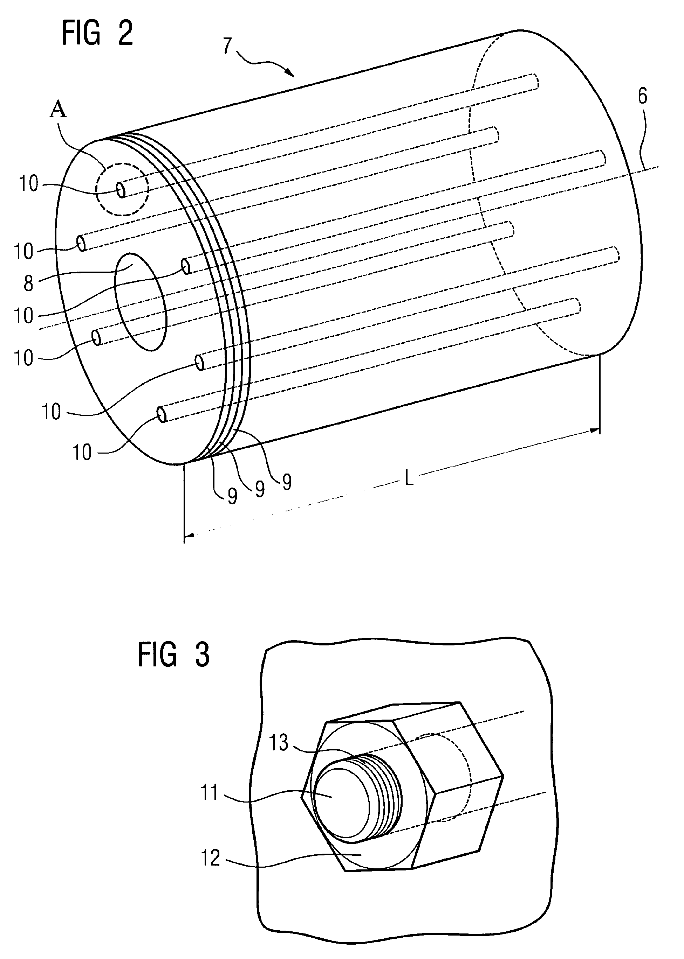

In der Figur 2 ist ein Blechpaket 7 dargestellt. Der Übersichtlichkeit wegen ist keine Ständerwicklung 5 bzw. Läuferwicklung 3 dargestellt. Das Blechpaket 7 ist hierbei rotationssymmetrisch zur Rotationsachse 6 ausgebildet. Das Blechpaket 7 weist eine Öffnung 8 auf, in der der Rotor 2 angebracht werden kann. Das Blechpaket 7 ist aus mehreren Segmentblechen 9 ausgebildet. Aus Gründen der Übersichtlichkeit sind in der Figur 2 lediglich drei Segmentbleche 9 dargestellt. Die Segmentbleche 9 liegen dabei dicht isoliert nebeneinander an. Die Anzahl an Segmentblechen für Generatoren in der kommunalen Energieversorgung kann hierbei zwischen 10.000 und 150.000 betragen.

Die Segmentbleche 9 weisen Bohrungen 10 auf, in denen sogenannte Spannbolzen 11 angeordnet werden können. Die Spannbolzen 11 sind in der Figur 2 nicht näher dargestellt. Der Spannbolzen 11 kann als eine Gewindestange ausgeführt werden. Eine Gewindestange wäre eine einfache Ausführungsform des Spannbolzens 11. Der Spannbolzen 11 ist hierbei länger als eine Gesamtlänge L des Blechpaketes. In der Regel wird an den beiden Enden des Spannbolzens 11 eine Mutter 12 angebracht. Der Spannbolzen 11 ist im Bereich des Blechpakets zylindrisch. An den Enden weist der Spannbolzen 11 in der Regel ein Gewinde auf. Die Mutter 12 wird hierbei mit einem entsprechenden Drehmoment gedreht. Dadurch werden die einzelnen Segmentbleche 9 gegeneinander gepresst. Der Spannbolzen 11 kann sich hierbei ausdehnen.

Eine über die rechnerisch zulässige mechanische Belastung während des Betriebes kann zu einer Schädigung des Spannbolzens 11 führen. Materialfehler des Spannbolzens 11 können ebenfalls zu Schädigungen führen. Im schlimmsten Fall kann der Spannbolzen in zwei Teile zerbrechen.

In Figur 3 ist ein vergrößerter Ausschnitt des Blechpakets 7 der in Figur 2 mit A bezeichneten und durch eine gestrichelte Linie dargestellt. Hierbei wird ein äußeres Ende eines Spannbolzens 11 gezeigt. Der Spannbolzen 11 weist ein Gewinde 12 auf. Auf diesem Gewinde 12 ist die Mutter 12 angebracht. Durch ein entsprechendes Drehmoment übt die Mutter 12 eine Kraft in Richtung der Rotationsachse 6 auf die Segmentbleche 9 aus.

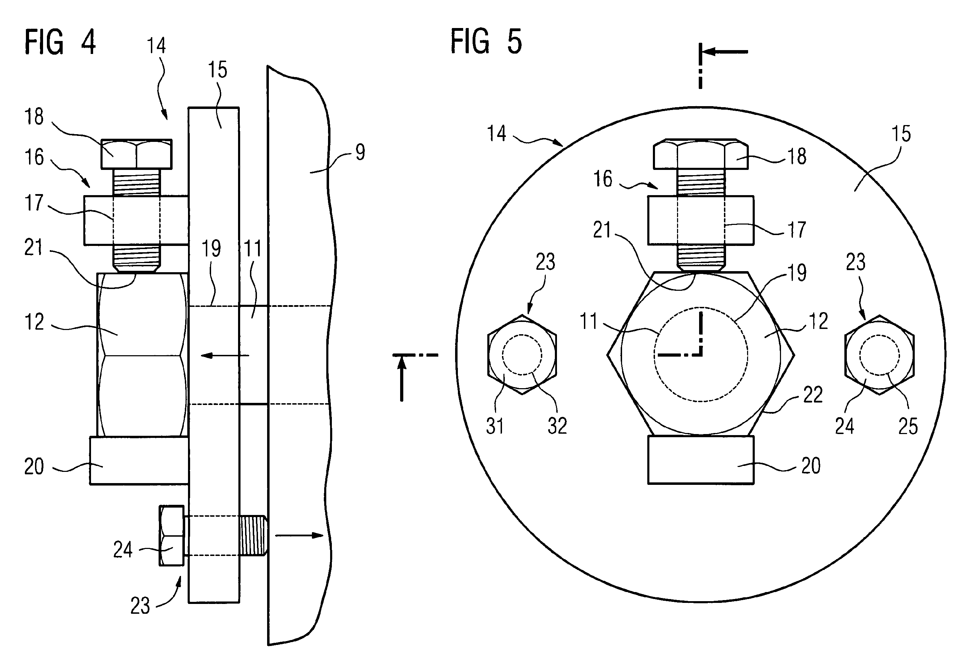

In der Figur 4 ist in einer Seitenansicht eine Spannvorrichtung 14 dargestellt. Die Spannvorrichtung 14 weist eine Platte 15 auf. Auf der Platte 15 ist eine mit der Platte 15 verbundene erste Gewindeführungseinrichtung 16 mit einem ersten Gewinde 17 zum Aufnehmen einer ersten Gewindeschraube 18 angeordnet. Die Platte 15 weist darüber hinaus eine Spannbolzendurchführung 19 auf, durch die ein Spannbolzen 11 geführt werden kann. Die erste Gewindeführungseinrichtung 16 ist dabei derart ausgebildet, dass die erste Gewindeschraube 18 zum Ausüben einer Festhaltekraft auf den Spannbolzen 11 ausgebildet ist. Dabei wird die Gewindeschraube 18 senkrecht zur Ausdehnungsrichtung des Spannbolzens 11 angeordnet. Durch Drehen der ersten Gewindeschraube 18 wird die Mutter 12 zwischen einem mit der Platte 15 fest verbundenen Festhalteblock 20 und einem Schraubenende 21 eingeklemmt. Das auf die erste Gewindeschraube 18 ausgeübte Drehmoment muss hierbei entsprechend groß sein. Insbesondere muss die Festhaltekraft so groß sein, damit die Reibungskräfte zwischen der Gewindeschraube 18 und der Mutter 12 ein Verschieben der Mutter 12 gegenüber der Gewindeschraube 18 in Richtung der Ausdehnungsrichtung des Spannbolzens 11 verhindert wird.

In alternativen Ausführungsformen kann statt dem Festhalteblock 20 eine weitere Gewindeschraube angebracht werden.

In weiteren Ausführungsformen kann selbstverständlich an jeder Kante der Mutter 12 eine Gewindeschraube angebracht werden.

Die Platte 15 ist mit einer zweiten Gewindeführungseinrichtung 23 ausgebildet. Zweckmäßigerweise sollten mindestens zwei zweite Gewindeführungseinrichtungen 23 auf der Platte 15 ausgebildet werden. Die zweite Gewindeführungseinrichtung 23 weist eine zweite Gewindeschraube 24 auf, die über ein zweites Gewinde 25 in der Platte 15 eine Druckkraft auf einer Gegenplatte zum Ausüben einer Zugkraft auf den Spannbolzen 11 ausübt und eine dritte Gewindeschraube 31, die über ein drittes Gewinde 32 in der Platte 15 eine Druckkraft auf die Gegenplatte eine Zugkraft auf den Spannbolzen 11 ausübt.

In Figur 4 ist die Gegenplatte nicht näher dargestellt. Die Gegenplatte kann auch als Segmentblech 9 ausgebildet sein. In der Figur 4 wird die Druckkraft direkt auf ein Segmentblech 9 ausgeübt. Der Einsatz der Gegenplatte zwischen dem Segmentblech 9 und der Spannvorrichtung 14 ist zur Vermeidung von Druckstellen infolge der Druckkraft zu empfehlen.

Die Druckkraft entsteht durch Drehen der zweiten 24 und dritten 31 Gewindeschrauben. In der Figur 4 und 5 ist der Einfachheit wegen die Druckplatte mit zwei zweiten Gewindeführungseinrichtungen ausgebildet. Denkbar sind selbstverständlich mehrere zweite Gewindeführungseinrichtungen.

Die Spannvorrichtung 14 wird hierbei zunächst über die erste Gewindeführungseinrichtung 16 an der Mutter 12 und somit an der Spannvorrichtung 11 festgeklemmt. Anschließend werden die Gewindeschrauben 24 und 31 solange gedreht, bis sie an der Gegenplatte bzw. an dem ersten Segmentblech 9 anliegen. Dadurch werden Anfangsbedingungen bzw. Startbedingungen geschaffen. Durch gleichzeitiges Drehen der zweiten Gewindeführungseinrichtung 23 wird eine Druckkraft auf die Gegenplatte bzw. erstes Segmentblech 9 ausgeübt, was zu einer Zugkraft auf den Spannbolzen 11 führt. Das Drehen muss hierbei nicht gleichzeitig erfolgen, dies kann auch unter Umständen hintereinander ausgeführt werden. Zu beachten ist hierbei aber, dass die zweite Gewindeschraube 24 und die dritte Gewindeschraube 31 abwechselnd gedreht werden sollten. Über geeignete Sensoreinrichtungen werden die Drehmomente, die auf die Gewindeschrauben 24 und 31 einwirken, gemessen und die Werte der Drehmomente an ein Anzeigegerät 26 weitergeleitet.

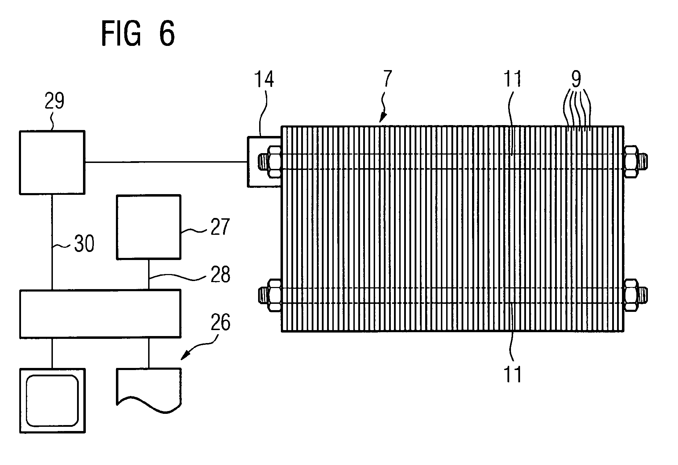

In Figur 6 ist eine schematische Darstellung einer Überprüfung eines Spannbolzens 11 zu sehen. Eine Streckvorrichtung 27 wird mit dem Spannbolzen 11 verbunden.

In einer ersten Ausführungsform kann die Streckvorrichtung 27 hierbei ein Hydraulikaggregat aufweisen, das eine Zugkraft über lineare Kräfte auf den Spannbolzen 11 ausübt.

In einer zweiten Ausführungsform kann die Streckvorrichtung 27 eine Dreheinrichtung aufweisen, das über an den zweiten und dritten Gewindeschrauben 24 und 31 anliegenden Drehmomenten eine Zugkraft auf die Spannbolzen ausübt. In dieser alternativen Ausführungsform muss die Spannvorrichtung 14 zunächst angebracht werden. Die von der Streckvorrichtung 27 aufgebrachte Kraft, die in der ersten Ausführungsform eine lineare Kraft ist, kann die Zugkraft direkt ermittelt werden. In der zweiten Ausführungsform muss über das Drehmoment und den Schraubengewindegängen der zweiten und dritten Gewindeschrauben 24 und 31 die Zugkraft rechnerisch ermittelt werden. Die Streckvorrichtung 27 ist hierbei derart ausgebildet, dass die während eines Streckvorgangs aufgewendeten Werte der Zugkraft über eine Datenleitung 28 an das Anzeigegerät 26 weitergeleitet werden.

Eine Längenmessvorrichtung 29 ist mittels eines Sensors an dem Ende des Spannbolzens 11 angeschlossen. Die Längenmessvorrichtung 29 ist ausgebildet zum Messen der Längenausdehnung des Spannbolzens 11 unter Einfluss der Zugkraft, die durch die Streckvorrichtung 27 ausgeübt wird. Das Anzeigegerät 26 ist derart ausgebildet, dass die Zugkraft und die Längenausdehnung dargestellt und protokolliert wird. Ein Fachmann wird anhand dieser Werte erkennen können, inwieweit der Spannbolzen momentan belastet ist. Über eine weitere Datenleitung 30 wird der Wert der Längenausdehnung des Spannbolzens an das Anzeigegerät 26 weitergeleitet.

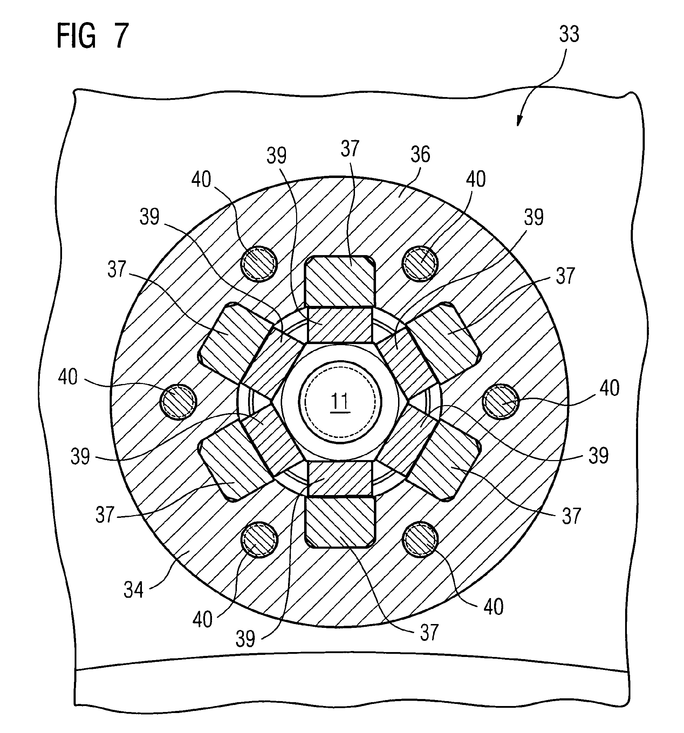

In der Figur 7 ist eine Draufsicht einer alternativen Spannvorrichtung 33 zu sehen. Eine Deckplatte 36 ist im wesentlichen rotationssymmetrisch um den Spannbolzen 11 ausgebildet. Die Deckplatte 36 muss hierbei nicht rotationssymmetrisch sein, sie kann auch anderweitig ausgebildet sein. In der Spannvorrichtung 33 sind Keilstücke 37 derart angeordnet, dass sie in Längsrichtung des Spannbolzens 11 verschiebbar sind. Zum Ausüben einer Festhaltekraft genügt im Grunde genommen ein Keilstück 37. In der Figur 7 sind insgesamt sechs Keilstücke 37 dargestellt. Die Anordnung mit sechs Keilstücken 37 führt zu einer Verteilung von mehreren Kräften auf den Spannbolzen 11. Insgesamt erhöht sich dadurch die Festhaltekraft auf den Spannbolzen 11.

Die Deckplatte 36 ist mit einer zweiten Gewindeführungseinrichtung 40 mit einem zweiten Gewinde 41 zum Aufnehmen einer zweiten Gewindeschraube 42 ausbildet. Die in Figur 7 dargestellte Ausführungsform beinhaltet insgesamt sechs Gewindeführungseinrichtungen 40. Denkbar sind auch weniger Gewindeführungseinrichtungen 40 oder auch mehr Gewindeführungseinrichtungen 40.

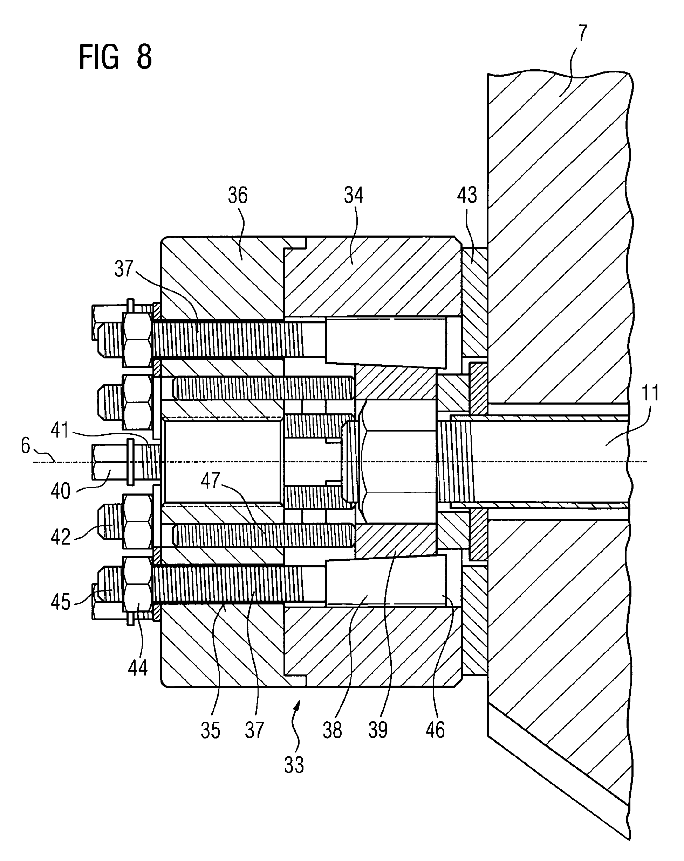

In der Figur 8 ist eine Seitenansicht der Spannvorrichtung 33 zu sehen. Eine Randplatte 34 ist um den Spannbolzen 11 herum angeordnet. Zwischen der Spannvorrichtung 33 und dem Blechpaket 7 ist eine Gegenplatte 43 angeordnet. In Ausdehnungsrichtung des Spannbolzens 11 ist auf die Randplatte 34 die Deckplatte 36 angeordnet.

Durch eine Bohrung 35 wird das Keilstück 37 verschieblich um den Spannbolzen 11 angeordnet. Das Keilstück 37 weist an einem Ende 45 ein Gewinde auf, an dem eine Mutter 44 angebracht ist. Durch Drehen der Mutter 44 wird das Keilstück in Ausdehnungsrichtung des Spannbolzens bewegt. Das Keilstück 37 weist am zweiten Ende 46 einen Keil 38 auf. Zwischen dem Keil 38 und dem Spannbolzen 11 ist ein Gegenkeil 39 derart angeordnet, dass durch ein durch Drehen der Mutter 44 erzeugtes Bewegen des Keilstückes 37 eine Festhaltekraft von dem Keilstück 37 auf den Gegenkeil 39 und von dort auf den Spannbolzen 11 ausgeübt wird. Ein Bewegen des Gegenkeiles 39 bzw. ein Mitziehen des Keiles 39 in Richtung der Mutter 44 wird durch ein Rückhalteelement 47 verhindert.

In der in Figur 8 dargestellten Ausführungsform ist spiegelbildlich zur Rotationsachse 6 ebenfalls eine Anordnung mit einem Keilstück 37 dargestellt. Für die Anordnung und Funktionsweise des Keilstücks 37 gilt das vorhergesagte. Durch Drehen der Gewindeschraube 42 wird eine Druckkraft auf die Gegenplatte 43 ausgeübt, was zu einer Zugkraft auf den Spannbolzen 11 führt.

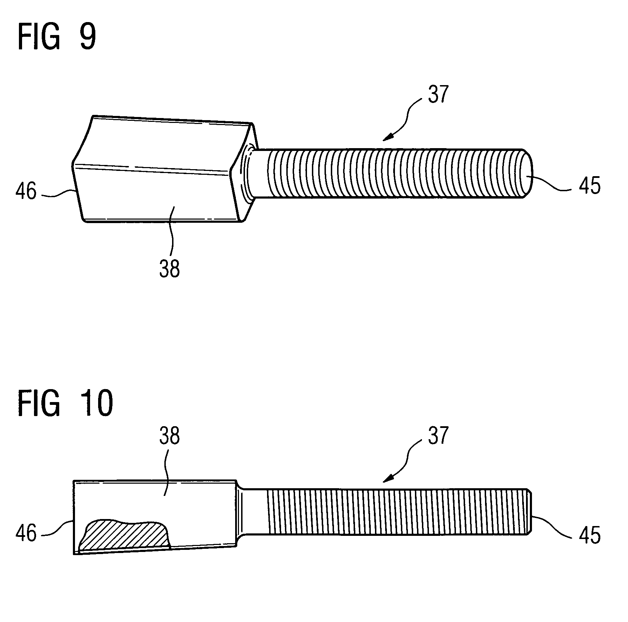

In Figur 9 ist eine perspektivische Darstellung eines Keilstückes 37 dargestellt.

In Figur 10 ist eine Seitenansicht des Keilstückes 37 dargestellt.

## Patentansprüche

1. Vorrichtung zur Überprüfung eines Spannbolzens (11) mit einer Streckvorrichtung (27), die zum Ausüben einer Zugkraft auf den Spannbolzen (11) ausgebildet ist, und
einer Längenmessvorrichtung (29) zum Messen einer Längenausdehnung des Spannbolzens (11) aufgrund der Einwirkung der Streckvorrichtung (27), sowie
einem Anzeigegerät (26) zum Darstellen und Protokollieren der Zugkraft und der Längenausdehnung.

2. Vorrichtung nach Anspruch 1,
**dadurch gekennzeichnet, dass**
die Streckvorrichtung (27) ein Hydraulikaggregat zum Ausüben der Zugkraft aufweist.

3. Vorrichtung nach Anspruch 1 oder 2,
**dadurch gekennzeichnet, dass**
die Streckvorrichtung (27) eine Spannvorrichtung (14) zum Befestigen an dem Spannbolzen (11) aufweist.

4. Vorrichtung nach Anspruch 3,
**dadurch gekennzeichnet, dass**
die Spannvorrichtung (14, 33) mit einer Platte (15) und zumindest einer mit der Platte (15) verbundenen ersten Gewindeführungseinrichtung (16) mit einem ersten Gewinde (17) zum Aufnehmen einer ersten Gewindeschraube (18) sowie mit zumindest einer zweiten Gewindeführungseinrichtung (23, 40) mit einem zweiten Gewinde (25) zum Aufnehmen einer zweiten Gewindeschraube (24) ausgebildet ist.

5. Vorrichtung nach Anspruch 4,
**dadurch gekennzeichnet, dass**
die erste Gewindeführungseinrichtung (16) zum Ausüben einer Festhaltekraft auf den Spannbolzen (11) ausgebildet ist und die zweite Gewindeführungseinrichtung (23) zum Ausüben einer Druckkraft auf eine Gegenplatte zum Ausüben einer Zugkraft auf den Spannbolzen (11) ausgebildet ist.

6. Vorrichtung nach Anspruch 3,
**dadurch gekennzeichnet, dass**
die Spannvorrichtung (14, 33) mit einer Randplatte (34) und einer zumindest eine Bohrung (35) aufweisende Deckplatte (36) ausgebildet ist,
wobei die Bohrung (35) zum Aufnehmen eines Keilstückes (37) mit einem Keil (38) ausgebildet ist,
wobei der Keil (38) an einem Gegenkeil (39) anliegt zum Ausüben einer Festhaltekraft auf den Spannbolzen (11),
wobei die Deckplatte (36) mit zumindest einer zweiten Gewindeführungseinrichtung (23, 40) mit einem zweiten Gewinde (25, 41) zum Aufnehmen einer zweiten Gewindeschraube (24, 42) ausgebildet ist.

7. Vorrichtung nach Anspruch 6,
**dadurch gekennzeichnet, dass**
die zweite Gewindeführungseinrichtung (23, 40) zum Ausüben einer Druckkraft auf eine Gegenplatte (43) zum Ausüben einer Zugkraft auf den Spannbolzen (11) ausgebildet ist.

8. Verfahren zur Überprüfung eines Spannbolzens (11),
**dadurch gekennzeichnet, dass**
an dem Spannbolzen (11) eine Streckvorrichtung (27), die eine Zugkraft auf den Spannbolzen (11) ausübt, angebracht wird, wodurch sich der Spannbolzen (11) in seiner Längsausrichtung ausdehnt und die Zugkraft und Längenausdehnung mit einem Anzeigegerät (26) dargestellt und protokolliert wird.

9. Verfahren nach Anspruch 8,
**dadurch gekennzeichnet, dass**
an dem Spannbolzen (11) eine Spannvorrichtung (14) angebracht wird, die mit einer ersten Gewindeeinrichtung (16) an dem Spannbolzen (11) kraftschlüssig angebracht wird und die mit einer zweiten Gewindeeinrichtung (23) eine Druckkraft auf eine Gegenplatte ausübt, wodurch der Spannbolzen (11) in seiner Längsausrichtung ausgedehnt wird.
